# EUROPÄISCHE PATENTSCHRIFT

(11) **EP 0 979 356 B1**
(45) Veröffentlichungstag und Bekanntmachung des Hinweises auf die Patenterteilung: **21.01.2004**
(21) Anmeldenummer: 99914437.1
(22) Anmeldetag: 25.02.1999
(51) Int. Cl.: F04D 29/58, H02K 9/20

(54) **VORRICHTUNG ZUM ÄUSSEREN KÜHLEN DES ELEKTRISCHEN ANTRIEBSMOTORS EINES KREISELPUMPENAGGREGATES**
DEVICE FOR THE EXTERNAL COOLING OF THE ELECTRIC DRIVE MOTOR OF A CENTRIFUGAL PUMP UNIT
DISPOSITIF POUR REFROIDIR EXTERIEUREMENT UN MOTEUR D'ENTRAINEMENT ELECTRIQUE D'UN ENSEMBLE POMPE CENTRIFUGE

(30) Priorität: 28.02.1998 DE 19808602
(43) Veröffentlichungstag der Anmeldung: 16.02.2000
(73) Patentinhaber: GRUNDFOS A/S, DK-8850 Bjerringbro (DK); Grundfos GmbH, 23812 Wahlstedt (DE)
(72) Erfinder: JENSEN, Niels, Due, DK-8850 Bjerringbro (DK); OLRIK, Henrik, Gerner, DK-3050 Humlebaek (DK)
(74) Vertreter: Vollmann, Heiko, Dipl.-Ing.
(86) Internationale Anmeldenummer: PCT/DE1999/000586
(87) Internationale Veröffentlichungsnummer: WO 1999/043960

(56) Entgegenhaltungen:
- DE-A- 2 719 121
- DE-C- 3 738 592
- GB-A- 745 976
- US-A- 3 838 947
- US-A- 4 295 067
- US-A- 4 854 373
- US-A- 4 930 996
- PATENT ABSTRACTS OF JAPAN vol. 010, no. 164 (E-410), 11. Juni 1986 & JP 61 015542 A (MATSUSHITA DENKI SANGYO KK;OTHERS: 01), 23. Januar 1986
- PATENT ABSTRACTS OF JAPAN vol. 006, no. 140 (E-121), 29. Juli 1982 & JP 57 062754 A (TEIKOKU DENKI SEISAKUSHO:KK), 15. April 1982

## Beschreibung

Die Erfindung geht aus von einer Vorrichtung zum äußeren Kühlen des elektrischen Antriebsmotors eines Kreiselpumpenaggregates, dessen Motorwelle oberhalb der Kreiselpumpe vertikal oder schräg nach oben verlaufend angeordnet ist.

Bei Kreiselpumpenaggregaten, die zum Beispiel für die Förderung von Abwässern in Schächten, Brunnen oder dgl. eingesetzt werden, erfolgt die Abführung der Verlustwärme des elektrischen, trocken laufenden Antriebsmotors über die Motoraußenfläche an das ihn umgebende Medium. Das Kreiselpumpenaggregat ist in der Regel mit dem Motor oberhalb der Pumpe in dem Schacht oder Brunnen montiert und bei Beginn der Förderung in der Regel vollständig in das Abwasser eingetaucht. Nach einer bestimmten Förderzeit ragt der Motor aus dem Abwasser heraus, und zwar wenn der Pegelstand des Wassers entsprechend tief gesunken ist. Da die Aggregate im Ein-Aus-Schaltbetrieb gefahren werden, treten bei kurzen Laufzeiten normalerweise keine Kühlprobleme auf.

Anders ist die Situation, wenn die Aggregate trocken aufgestellt werden, d. h. nicht eingetaucht betrieben werden. Da bei, z.B. aus Explosionsschutzgründen, geschlossen ausgeführten Motoren die äußere Motorkühlfläche mit der zweiten Potenz, die Leistung des Motors aber mit der dritten Potenz der Abmessungen ansteigt, ist die Grenze des Einsatzes dieser Aggregate bei Abgabe der Verlustwärme alleine an die Umgebungsluft sehr schnell erreicht.

Des Weiteren ist es bekannt, den Antriebsmotor außen mit einem ihn mit abstand umgebenden Mantel zu versehen und den so gebildeten Zwischenraum von einem Teilstrom des Pumpenförderstromes durchströmen zu lassen, was als so genannte Kappenkühlung bekannt ist. Diese Kühlungsart eignet sich jedoch nur für Fördermedien, die keine Schmutzanteile oder andere feinteilige Beimengungen oder Verunreinigungen enthalten, weil sonst die pumpenseitigen Strömungszu- und - abgänge verstopfen und die Kappenkühlung dadurch unwirksam wird.

In der US-Patentschrift 3,838,947 ist ein Motorpumpenaggregat beschrieben, dessen Motor vom Spaltrohrmotortyp ist. Innerhalb des geschlossenwandigen Spaltrohrgehäuses sind sowohl der elektrische Stator als auch dessen Rotoreinheit, die außer dem üblichen Rotor noch einen inneren, pumpenseitigen, magnetischen Polring aufweist, angeordnet. Dem inneren Polring ist außerhalb des Spaltrohrgehäuses ein äußerer magnetischer Polring frei rotationsfähig zugeordnet, an dem das Pumpenlaufrad starr befestigt ist, so dass das Pumpenlaufrad mittels der rotierenden Rotoreinheit aufgrund der Magnetkraftwirkung mitrotiert wird. Die Innenseite des Spaltrohrgehäuses ist mit einer zylindrischen, Kühlkondensat aufnehmenden Faserauskleidung versehen, und ferner befindet sich in diesem Gehäuse gesättigter Dampf und eine gewisse Menge an flüchtigem Kühlkondensat. Wenn die Rotoreinheit rotiert, kondensiert der Dampf im Bereich der Faserauskleidung und gelangt aufgrund der Kapillarwirkung in dieser Auskleidung in flüssigem Zustand über diese Auskleidung zu dem elektrischen Stator, um diesen zu kühlen, wobei das Kondensat dort wieder verdampft. Über diese innere Faserauskleidung und die Spaltrohrwand wird somit die Statorwärme nach außerhalb des Motors abgeleitet.

In der japanischen Offenlegungsschrift JP-A-61015542 ist ein Elektromotor für allgemeine Antriebszwecke beschrieben, dessen Gehäuse wenigstens eine ebene Fläche aufweist, an der eine Wärmesenkplatte befestigt ist, die mit einem so genannten Wärmerohr ausgestattet sein kann. In dem Wärmerohr zirkuliert ein Kühlmedium, um die Kühlwirkung der Wärmesenkplatte weiter zu verbessern.

Die Aufgabe der Erfindung besteht in der Schaffung einer Vorrichtung zum äußeren Kühlen des Antriebsmotors eines Kreiselpumpenaggregates, wobei die Vorrichtung eine beträchtlich verbesserte Außenkühlung des Antriebsmotors auch dann gewährleistet, wenn der Motor aus dem Fördermedium über eine längere Zeitdauer herausragt.

Die Lösung dieser Aufgabe wird mit den Merkmalen des Patentanspruchs 1 erreicht.

Durch diese Lösung wird eine beträchtlich verbesserte Außenkühlung des Antriebsmotors des Kreiselpumpenaggregates zum Fördern von insbesondere Abwässern auch dann erzielt, wenn sich der Antriebsmotor bei in Betrieb befindlichem Aggregat längere Zeit oder dauernd außerhalb des flüssigen Fördermediums befindet.

An dem dem Stator abgewandten Wandbereich des Hohlkörpers entsteht, da sich der Motor im Einbauzustand des Aggregates oberhalb der Kreiselpumpe befindet, eine Abwärtsströmung in dem Hohlkörper, wodurch das Flüssigkeitsgemisch nach unten zu der Pumpe gelangt. Hier erfolgt der Wärmedurchgang zur Förderflüssigkeit in der Pumpe, um den Hauptteil der angefallenen Verlustwärme des Motors an die Förderflüssigkeit abzugeben. Sodann strömt das Flüssigkeitsgemisch wieder an der dem Stator zugewandten Wand des Hohlkörpers nach oben und nimmt wieder neue Wärme von dem Motor auf, und die genannten Strömungsvorgänge und Wärmeübertragungen wiederholen sich. Die von dem stehenden Stator des Antriebsmotors erzeugte Wärme wird an die Flüssigkeit in dem Hohlkörper, der einerseits an der umgehenden Motorwand anliegt, weitergeleitet und erzeugt darin einen vertikalen Flüssigkeitsumlauf, bei dem durch den Wandkörper in dem Hohlkörper eine klare Trennung von Aufwärtsströmung und Abwärtsströmung der wärmeübertragenden Flüssigkeitsfüllung in dem Hohlkörper erzielt und ferner erreicht wird, dass sämtliche erwärmte Flüssigkeit auch zur Pumpe geleitet wird. Da der vorteilhaft ringförmige Hohlkörper andererseits an seinem Unterende mit der Pumpenwand in wärmeleitender Verbindung steht und die Pumpe von der wesentlich kälteren Förderflüssigkeit durchströmt wird, gelangt die Wärme von der ankommenden Flüssigkeit in dem Hohlkörper zum größten Teil an die kältere Förderflüssigkeit in der Pumpe und wird von dieser Förderflüssigkeit abgeleitet. Der restliche Wärmeanteil der Flüssigkeit in dem Hohlkörper gelangt über dessen freie Außenfläche an die Umgebungsluft oder das Umgebungswasser des Antriebsmotors. Ein weiterer Vorteil der Vorrichtung nach der Erfindung besteht darin, dass die teilchenförmigen Beimengungen des Fördermediums sich nicht nachteilig auf die Kühlungswirkung des Hohlkörpers auswirken, weil sie nicht in den Hohlkörper hineingelangen können.

Eine vorteilhafte Flüssigkeit in dem Hohlkörper ist ein Gemisch aus Wasser und einer anderen Flüssigkeit, die einen niedrigeren Siedepunkt als Wasser hat. Eine solche andere Flüssigkeit ist beispielsweise ein Alkohol. Durch ein solches Flüssigkeitsgemisch kann die Konvektionsströmung in dem Hohlkörper verstärkt werden. Dies ist dann der Fall, wenn der vom Motor auf die Kühlflüssigkeit in dem Hohlraum übertragene Wärme die Entstehung von kleinen Dampfblasen in der Kühlflüssigkeit bewirkt, die schnell nach oben steigen und so die Umlaufgeschwindigkeit des Gemisches in dem Hohlraum erhöhen. Die aufgestiegenen Dampfblasen kondensieren dann wieder in dem nicht mit Flüssigkeit gefüllten Oberbereich des Hohlkörpers.

Um die Zirkulation der Konvektionsströmung der Flüssigkeit oder eines Flüssigkeitsgemisches in dem Hohlkörper noch weiter zu verbessern, kann so vorgegangen sein, dass die Flüssigkeitsfüllung des hohlkörpers nicht mehr als etwa 95 % seines Fassungsvermögens beträgt und dass der restliche Raum der Hohlkörpers von Luft evakuiert ist. Hierdurch ist der Siedepunkt der Flüssigkeitsfüllung wesentlich erniedrigt, so dass die strömungsfördernde Dampfblasenbildung darin erheblich früher einsetzt.

Eine weitere vorteilhafte Ausbildung der erfindungsgemäßen Vorrichtung besteht darin, dass sie als gesonderte Baueinheit ausgebildet ist, so dass sie nachträglich am Motor des Kreiselpumpenaggregates angebaut werden kann. Es ist alternativ aber auch möglich, die erfindungsgemäße Vorrichtung als einen integralen Bestandteil des gesamten Gehäuses des Kreiselpumpenaggregates vorzusehen.

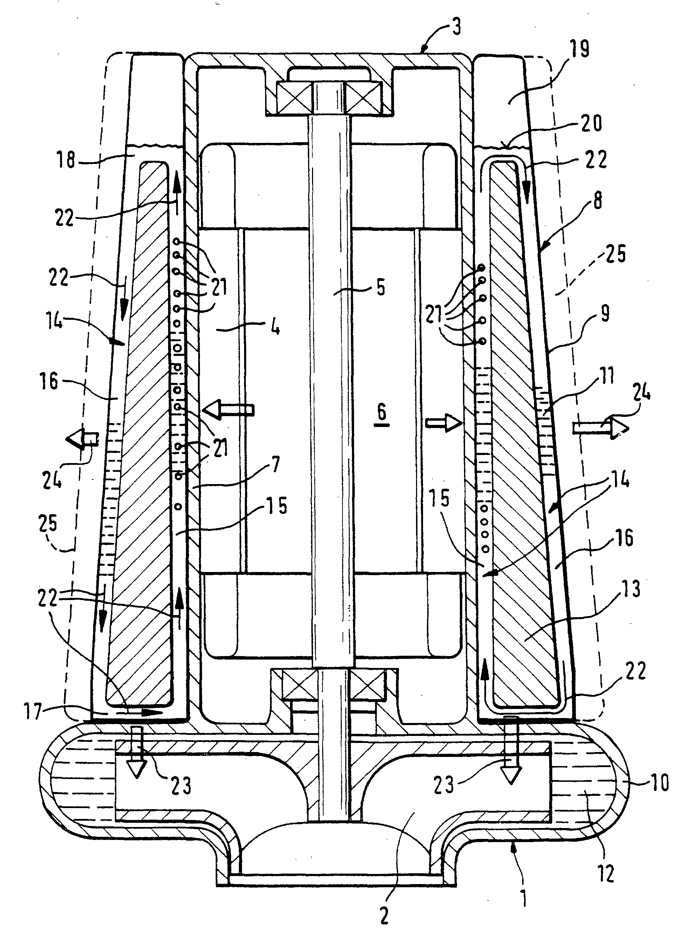

Die Erfindung ist nachstehend anhand eines in der anliegenden Zeichnung dargestellten Ausführungsbeispieles näher erläutert. In dieser Zeichnung ist das Ausführungsbeispiel in einer einzigen Figur im Axialschnitt gezeigt.

Das gezeigte Ausführungsbeispiel umfasst eine Kreiselpumpe 1 mit einem Laufrad 2 und einen elektrischen Antriebsmotor 3 mit einem Stator 4 und einer Welle 5 mit einem darauf montierten Rotor 6. Auf der Welle 5 des Motors ist in üblicher Weise auch das Laufrad 2 der Pumpe 1 montiert. Das Ausführungsbeispiel ist so gezeichnet, wie es auch am Einsatzort, z.B. in einem Schacht oder Brunnen für Abwässer, montiert werden kann, d.h. der Motor 3 befindet sich beispielsweise mit vertikal stehender Welle 5 oberhalb der Pumpe 1.

Bei dem gezeigten Beispiel ist das Gehäuse 7 des Motors 3 von einer als gesonderte Baueinheit ausgebildeten Vorrichtung 8 in Form eines hermetisch geschlossenen, hier z.B. ringförmigen Hohlkörper 9 aus wärmeleitendem Material umgeben. Dabei liegt der Hohlkörper mit seiner Innenwandfläche nicht nur an dem Motorgehäuse 7 an, sondern mit seiner unteren Wandfläche auch an dem Gehäuse 10 der Pumpe 1, so dass zwischen den aneinander anliegenden Wandflächen des Motorgehäuses 7 und des Pumpengehäuses 10 sowie des Hohlkörpers 9 ein wärmeleitender Flächenkontakt besteht. In dem Hohlkörper 9 befindet sich eine Flüssigkeit 11 zur Übertragung der Wärme vom Motor 3 auch auf die Förderflüssigkeit 12 in dem Pumpengehäuse 10, wie noch klar wird.

Um eine möglichst große Wärmeabführung zu erzielen, erstreckt sich der Holkörper 9 über die gesamte Länge des Motors 3. Aufgrund seiner relativ großen Höhe kann der ringförmige Hohlkörper als eine Art zylindrischer Ring angesehen werden, wenn man den gezeigten Axialschnitt des Hohlkörpers betrachtet. In der Mitte innerhalb des zylindrischen Ringraumes des Hohlkörpers befindet sich ein zylindrischer Wandkörper 13, der vorteilhaft eine solche Höhe aufweist, die sich etwa über die Länge des Stators 4 des Motors 3 erstreckt. Durch das Vorsehen des zylindrischen Wandkörpers 13 wird innerhalb des Hohlkörpers 9 ein definierter zirkularer Strömungsweg 14 für eine vertikal umlaufende Konvektionsströmung der wärmeübertragenden Flüssigkeit 11 geschaffen. Der zirkulare Strömungsweg 14 umfaßt einen inneren Abschnitt 15, in dem erwärmte Flüssigkeit 11 nach oben strömt, einen äußeren Abschnitt 16, in dem die Flüssigkeit abwärts strömt, sowie einen kurzen unteren Querabschnitt 17 und einen kurzen oberen Querabschnitt 18, wodurch die langen Abschnitte 15 und 16 miteinander verbunden sind.

Der Hohlkörper 9 ist mit der wärmeübertragenden Flüssigkeit 11 im wesentlichen gefüllt, so daß ein kleiner Hohlraum 19 vorhanden ist. Der Füllungsgrad beträgt bis zu etwa 95 % des Fassungsvermögens des Hohlraumes; dies ist in der Zeichnung mit 20 gekennzeichnet. Auf jeden Fall ist die Füllung bei Verwendung eines inneren Wandkörpers 13 zur Ausbildung der Strömungswege 15 bis 18 so ausgeführt, daß das Oberende der Trennwand 13 überströmt wird. Es verbleibt somit der obere, z. B. ringförmige Hohlraum 20 in dem Hohlkörper 9, der entweder mit Luft gefüllt oder auch evakuiert ist, wodurch eine Dampfblasenbildung innerhalb der erhitzten, aufsteigenden Flüssigkeit 11 besonders im letzten Fall erleichtert ist.

Die in dem Hohlkörper 9 verwendete Flüssigkeit kann Wasser sein. Sie kann aber auch aus einem Gemisch aus Wasser und einer anderen Flüssigkeit bestehen, die einen niedrigeren Siedepunkt als Wasser hat. Hierdurch wird eine erleichterte Dampfblasenentstehung in der Flüssigkeit 11 bewirkt, welche wiederum zur Folge hat, daß durch entstandene Dampfblasen in dem inneren Strömungsabschnitt 15 des zirkularen Strömungsweges 14 in letzterem eine schnellere Strömung und damit ein schnellerer Abtransport von Wärme erfolgt.

Eine vorzugsweise Flüssigkeit mit niedrigerem Siedepunkt ist Alkohol. Bei solchen Gemischen siedet der Alkohl bei Atmosphärendruck je nach Mischungsverhältnis schon ab etwa 80° C. Da die Verdampfungswärme des Alkohols nur halb so groß ist wie die des Wassers, setzt die Dampfblasenbildung schon relativ früh ein und verbessert die Konvektionsströmung, wenn die Wärme vom Stator 4 des Motors auf die Flüssigkeit 11 dem Hohlkörper 9 übergeht. Des weiteren gewährleistet Alkohol auch einen Frostschutz für die Kühlflüssigkeit.

Anstelle des Wassers allein kann auch ein Alkohol gewählt werden. Ferner ist es auch möglich, im Falle des Wassers als Mischungspartner einen anderen flüssigen Mischungspartner zu wählen, z. B. ebenfalls einen Alkohol. Die Mischungspartner sind so zu wählen, daß sie bei gleichem Druck unterschiedliche Dapmfdruckkurven haben und daß die Verdampfungswärme des bei niedriger Temperatur siedenden Partners unter derjenigen des bei höher Temperatur siedenden Partners liegt.

Der Kühlungsvorgang für den Motor bei in Betrieb befindlichem, vorstehend beschriebenem Kreiselpumpenaggregat findet wie folgt statt. Der insbesondere durch den Stator 4 erhitzte Motor 3 leitet seine Verlustwärme quer durch die zylindrische Motorgehäusewand 7 und durch die Innenwand des Hohlkörpers 9 an die Flüssigkeit 11, die sich in dem inneren Abschnitt 15 des zirkularen Strömungsweges 14 befindet. Infolge der Wärmeübertragung erhitzt sich die Flüssigkeit 11, in der sich, insbesondere wenn sie Alkohol enthält, Dampfblasen 21 ausbilden, die in dem Abschnitt 15 nach oben aufsteigen und dadurch die Flüssigkeit in eine schnellere Aufwärtsbewegung versetzen. Diese schnellere Bewegung überträgt sich natürlich auch auf den abwärts gerichteten Strömungsabschnitt 16 des zirkularen Strömungsweges 14 und sorgt so dafür, so daß sich innerhalb des gesamten zirkularen Strömungsweges eine erhöhte Umlaufgeschwindigkeit ausbildet. Der Strömungsverlauf in dem zirkularen Strömungsweg 14 - ist mit den Pfeilen 22 angedeutet. Wenn die Dampfblasen 21 oben an der Flüssigkeitsgrenze 19 angekommen sind, kondensieren sie wieder. So ist sichergestellt, daß sich auf dem äußeren Strömungsabschnitt 16 des zirkularen Strömungsweges 14 nur Flüssigkeit abwärts bewegt.

Sobald die erwärmte Flüssigkeit 11 unten radial einwärts am Pumpengehäuse 10 vorbeiströmt, findet in diesem Bereich ein Wärmedurchgang durch die pumpenseitige Wandung des Hohlkörpers 9 und durch das Pumpengehäuse hindurch auf die Förderflüssigkeit 12 in der Pumpe 1 statt, was mit dem Pfeil 23 angedeutet ist. Mit der Förderflüssigkeit 12 wird diese Verlustwärme dann abgeführt; wobei der Anteil der so abgeführten Verlustwärme etwa 70 % beträgt. Der restliche Anteil der Verlustwärme von etwa 30 % wird gemäß dem Pfeil 24 im wesentlichen über die Außenwand des Hohlkörpers 9 an die Umgebung, Luft oder Wasser, abgeführt, wenn sich die erwärmte Flüssigkeit 11 auf dem äußeren Strömungsabschnitt 16 befindet.

Die Vorrichtung 8 kann nicht nur als getrennte Baueinheit ausgeführt sein, die außen an dem Kreiselpumpenaggregat 1, 3 anbringbar ist, sondern sie kann auch als integraler Bestandteil des gesamten Gehäuses des Aggregates ausgeführt sein. Der Hohlkörper 9 der Vorrichtung kann ferner mit einer äußeren Berippung 25 versehen sein, um die hier stattfindende Wärmeabführung zu erhöhen.

In weiterer Ausgestaltung kann das Gehäuse 9 auch andere Formen als die dargestellte Ringform aufweisen. Es kann beispielsweise im Querschnitt eine Segmentform haben, wobei ein oder mehrere solcher Segmentgehäuse um den Motor herum angeordnet sein können. Zum Beispiel kann ein solches Segmentgehäuse als Halbschale ausgebildet sein, und zwei solche Halbschalen können den Motor umgeben. In einigen Anwendungsfällen kann es ausreichen, daß der Motor umfangsmäßig nur teilweise von einem mit wärmeübertragender Flüssigkeit gefüllten Hohlkörper umgeben ist, d.h. daß z.B. nur eine Halbschale oder ein Segmentgehäuse erforderlich ist. Jeder Hohlkörper bildet für sich ein geschlossenes System, in dem der beschriebene Wärmeübertragunsgkreislauf vorhanden ist.

Obwohl des weiteren eine vertikale oder im wesentliche vertikale Betriebslage des Motors sehr vorteilhaft ist. wie es weiter vorstehend beschrieben ist, können auch davon abweichende Lagen des Motors gewählt werden. Auch mit solchen mehr oder weniger schrägen oder geneigten Betriebslagen des Aggregates 1, 3 wird eine gute Abführung der Verlustwärme des Motors 3 an die Förderflüssigkeit der Kreiselpumpe 1 erreicht.

Aus dem Vorstehenden ergibt sich, daß mit der Förderflüssigkeit 12 der Pumpe 1 eine hochwirksame Wärmesenke auch dann zur Verfügung steht, wenn sich insbesondere der Motor 3 des Kreiselpumpenaggregates 1, 3 außerhalb der zur fördernden Flüssigkeit, insbesondere Abwasser, befindet. Die Kühlwirkung auf den Motor 3 ist insbesondere dann sehr stark, wenn die wärmeübertragende Flüssigkeit 11 in dem Hohlkörper 9 mit einer relativ hohen Umlaufgeschwindigkeit zirkuliert. Stark unterstützend wirkt hierbei die Bildung von Dampfblasen in dem inneren Strömungsabschnitt 15 des zirkularen Strömungsweges 14.

## Patentansprüche

1. Vorrichtung zum äußeren Kühlen des elektrischen Antriebsmotors eines Kreiselpumpenaggregates mit oberhalb der Kreiselpumpe vertikal oder schräg nach oben verlaufend angeordneter Motorwelle, **dadurch gekennzeichnet, dass** die Vorrichtung (8) einen hermetisch geschlossenen, den Motor (3) umfangsmäßig wenigstens teilweise umgebenden Hohlkörper (9) aus wärmeleitendem Material umfasst, der mit seiner motorseitigen und seiner pumpenseitigen Wandfläche mit dem Motor (3) und der Kreiselpumpe (1) in wärmeleitendem Flächenkontakt steht, dass der Hohlkörper (9) mit einer die Motorwärme übertragenden Flüssigkeit (11) im Wesentlichen gefüllt ist, die bei erwärmtem Motor einer natürlichen zirkularen Konvektionsströmung (22) unterliegt, und dass innerhalb des Hohlkörpers (9) ein Wandkörper (13) zur Ausbildung eines definierten zirkularen Strömungsweges (14) für eine aufwärts und abwärts umlaufende Konvektionsströmung vorgesehen ist.

2. Vorrichtung nach Anspruch 1, **dadurch gekennzeichnet, dass** die wärmeübertragende Flüssigkeit (11) ein Gemisch mit unterschiedlichen Dampfdruckkurven ist und dass die Verdampfungswärme des bei niedriger Temperatur siedenden Gemischteils unter derjenigen des bei höherer Temperatur siedenden Gemischteils liegt.

3. Vorrichtung nach Anspruch 2, **dadurch gekennzeichnet, dass** das Gemisch Wasser und ein Alkohol ist, der die Konvektionsströmung (22) durch seinen Verdampfungs-Kondensations-Phasenwechsel verstärkt.

4. Vorrichtung nach Anspruch 1, 2 oder 3, **dadurch gekennzeichnet, dass** die Flüssigkeitsfüllung des Hohlkörpers (9) bis zu etwa 95 % seines Fassungsvermögens beträgt.

5. Vorrichtung nach Anspruch 4, **dadurch gekennzeichnet, dass** der nicht mit Flüssigkeit gefüllte Raum (19) des Hohlkörpers (9) evakuiert ist und Dämpfe der Flüssigkeit in dem Hohlkörper enthält.

6. Vorrichtung nach einem der Ansprüche 1 bis 5, **dadurch gekennzeichnet, dass** sich der Hohlkörper (9) über die gesamte Länge des Motors (3) erstreckt.

7. Vorrichtung nach einem der Ansprüche 1 bis 6, **dadurch gekennzeichnet, dass** sie als gesonderte Baueinheit ausgebildet ist, die außen an dem Kreiselpumpenaggregat (1, 3) anbringbar ist.

8. Vorrichtung nach einem der Ansprüche 1 bis 6, **dadurch gekennzeichnet, dass** sie ein integraler Bestandteil des Gehäuses des Kreiselpumpenaggregates (1, 3) ist.

9. Vorrichtung nach einem der Ansprüche 1 bis 8, **dadurch gekennzeichnet, dass** der Hohlkörper (9) mit einer äußeren Berippung (25) versehen ist.

## Claims

1. A device for the external cooling of the electrical drive motor of a centrifugal pump unit with a motor shaft arranged running vertically or obliquely upwards above the centrifugal pump, **characterised in that** the device (8) comprises a hermetically closed hollow body (9) of heat-conducting material which peripherally surrounds the motor (3) at least partly and which with its wall surface on the motor side and on the pump side is in heat-conducting surface contact with the motor (3) and with the centrifugal pump (1), that the hollow body (9) is essentially filled with a fluid (11) which conducts the motor heat and which given a heated motor is subjected to a natural circulatory convection flow (22) and that within the hollow body (9) there is provided a wall body (13) for forming a defined circulatory flow path (14) for an upwardly and downwardly circulating convection flow.

2. A device according to claim 1, **characterised in that** the heat-conducting fluid (11) is a mixture with different vapour pressure curves and that the evaporation heat of the mixture consituent boiling at a low temperature lies below that of the mixture constituent boiling at a higher temperature.

3. A device according to claim 2, **characterised in that** the mixture is water and an alcohol which increases the convection flow (22) due to its evaporation-condensation phase change.

4. A device according to claim 1, 2 or 3, **characterised in that** the fluid filling of the hollow body (9) is up to roughly 95 % of its volume capacity.

5. A device according to claim 4, **characterised in that** the space (19) of the hollow body (9) not filled with fluid is evacuated and contains vapours of the fluid in the hollow body.

6. A device according to one of the claims 1 to 5, **characterised in that** the hollow body (9) extends over the whole length of the motor (3) .

7. A device according to one of the claims 1 to 6, **characterised in that** it is formed as a separate constructional unit which may be attached externally on the centrifugal pump unit (1, 3).

8. A device according to one of the claims 1 to 6, **characterised in that** it is an integral component of the housing of the centrifugal pump unit (1, 3).

9. A device according to one of the claims 1 to 8, **characterised in that** the hollow body (9) is provided with an outer ribbing (25).

## Revendications

1. Dispositif pour le refroidissement extérieur du moteur d'entraînement électrique d'un groupe motopompe centrifuge comprenant un arbre de moteur disposé au-dessus de la pompe centrifuge en s' étendant vers le haut verticalement ou de manière inclinée, **caractérisé en ce que** le dispositif (8) comprend un corps creux (9) en un matériau conducteur de la chaleur, qui est hermétiquement clos, et entoure au moins partiellement le moteur (3) sur sa circonférence, et qui, avec sa surface de paroi située du côté moteur et celle située côté pompe, est en contact superficiel de transmission de chaleur avec le moteur (3) et la pompe centrifuge (1), **en ce que** le corps creux (9) est sensiblement rempli d'un liquide caloporteur (11) transmettant la chaleur du moteur, qui, lorsque le moteur est échauffé, est soumis à un écoulement de convection (22) circulaire naturel, et **en ce qu'**à l' intérieur du corps creux (9) est prévu un corps de paroi (13) destiné à former un parcours d'écoulement circulaire défini (14) pour un écoulement de convection en révolution vers le haut et vers le bas.

2. Dispositif selon la revendication 1, **caractérisé en ce que** le liquide caloporteur (11) est un mélange avec des courbes de pression de vapeur différentes, et **en ce que** la chaleur d'évaporation de la partie de mélange à température d'ébullition basse se situe en-dessous de celle de la partie de mélange à température d'ébullition plus élevée.

3. Dispositif selon la revendication 2, **caractérisé en ce que** le mélange est composé d'eau et d'un alcool, qui intensifie l'écoulement de convection (22) par son changement de phase évaporation-condensation.

4. Dispositif selon la revendication 1, 2 ou 3, **caractérisé en ce que** le remplissage en liquide du corps creux (9) est fait jusqu'à environ 95% de sa capacité.

5. Dispositif selon la revendication 4, **caractérisé en ce que** le vide est fait dans l'espace (19) non rempli de liquide, du corps creux (9), cet espace renfermant des vapeurs du liquide dans le corps creux.

6. Dispositif selon l'une des revendications 1 à 5, **caractérisé en ce que** le corps creux (9) s'étend sur la totalité de la longueur du moteur (3).

7. Dispositif selon l'une des revendications 1 à 6, **caractérisé en ce qu'**il est réalisé sous forme de module de construction séparé, qui peut être rapporté à l'extérieur sur le groupe motopompe centrifuge (1, 3).

8. Dispositif selon l'une des revendications 1 à 6, **caractérisé en ce qu'**il constitue une partie intégrante du carter du groupe motopompe centrifuge (1, 3).

9. Dispositif selon l'une des revendications 1 à 8, **caractérisé en ce que** le corps creux (9) est pourvu d'un ailetage (25) extérieur.
